# EUROPÄISCHE PATENTANMELDUNG

(11) **EP 4 177 464 A1**
(43) Veröffentlichungstag der Anmeldung: **10.05.2023**
(21) Anmeldenummer: 22189827.3
(22) Anmeldetag: 11.08.2022
(51) Int. Cl.: F03G 3/00

(54) **ACHSVORRICHTUNG MIT ENERGIESPEICHERANORDNUNG SOWIE FÖRDERANLAGE MIT DER ACHSVORRICHTUNG**

(30) Priorität: 09.11.2021 DE 102021129050
(71) Anmelder: Manz AG, 72768 Reutlingen (DE)
(72) Erfinder: Freundt, Martin, 73732 Esslingen (DE)
(74) Vertreter: Kanzlei Dr.Negendanck Patentmanufaktur

(57) **Zusammenfassung**

Es wird eine Achsvorrichtung 1 mit einer Linearachse 3, mit mindestens einem Wagen 4 und mit einem elektrischen Antrieb 5 zum Verfahren des Wagens 4 auf der Linearachse 3 vorgeschlagen, mit einer mechanischen Energiespeicheranordnung 6, wobei die Energiespeicheranordnung einen Ladezustand zum Umwandeln von kinetischer Energie bei einem Abbremsen des Wagens 4 entlang der Linearachse 3 in einem Energieladebereich 10 in potentielle Energie, einen Speicherzustand zum Speichern der potentiellen Energie und einen Entladezustand zum Umwandeln der gespeicherten potentiellen Energie in kinetische Energie bei einer Beschleunigung des Wagens 4 entlang der Linearachse 3 in einem Energiefreigabebereich 11 einnehmen kann.

## Beschreibung

Die Erfindung betrifft eine Achsvorrichtung mit den Merkmalen des Oberbegriffs des Anspruchs 1. Die Erfindung betrifft auch eine Förderanlage mit mindestens einer derartigen Achsvorrichtung.

Linearachsen werden in der Industrie eingesetzt, um Schlitten passiv zu führen oder Schlitten mittels Antriebsmotoren entlang der Linearachse aktiv zu bewegen. Die üblichen Motoren zur Bewegung der Schlitten müssen sowohl Beschleunigungen als auch Abbremsungen der Schlitten umsetzen können. Es liegt in der Natur der Sache, dass gerade bei hochdynamischen Anwendungen entsprechend starke Motoren für die jeweiligen Beschleunigungsvorgänge eingesetzt werden müssen.

Ein Beispiel für eine derartige Linearachse ist z.B. in der Druckschrift WO 03070420 A1 gegeben, die den nächstkommenden Stand der Technik bildet. In dieser Druckschrift wird eine Zuführvorrichtung zum Zuführen von Werkstückträgern längs eines Gurtförderers mit einem gesteuert angetriebenen Transporteur beschrieben. Der Transporteur weist zwei Achsen auf, welche jeweils eine Platte zur Aufnahme der Bauteilträger bewegen.

Es ist Aufgabe der vorliegenden Erfindung, eine insbesondere hochdynamische Achsvorrichtung zu schaffen, welche mit einer vergleichsweise kleinen Motorleistung auskommt.

Diese Aufgabe wird durch eine Achsvorrichtung mit den Merkmalen des Anspruchs 1 sowie durch eine Förderanlage mit den Merkmalen des Anspruchs 15 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Achsvorrichtung, welche insbesondere für eine Förderanlage geeignet und/oder ausgebildet ist. Die Förderanlage ist insbesondere zur Förderung von Bauteilen und/oder von Bauteilhaltern für Bauteile geeignet und/oder ausgebildet. Somit kann die Förderanlage über die Achsvorrichtung die Bauteile oder Bauteilhalter optional ergänzend mit Bauteilen fördern. Die Bauteile können insbesondere als Werkstücke ausgebildet sein. Vorzugsweise sind die Bauteile länglich, insbesondere flächig ausgebildet. Vorzugsweise ist die Oberfläche der Bauteile flächig ausgebildet. Beispielsweise können die Bauteile als Platten oder Leisten realisiert sein. Die Bauteilhalter haben die Funktion, die Bauteile aufzunehmen, so dass die Bauteile über die Bauteilhalter gehalten werden. Optional bilden die Bauteile und/oder die Bauteilhalter einen Bestandteil der Förderanlage. Die Bauteilhalter können genau ein Bauteil oder mindestens ein Bauteil aufnehmen.

Die Achsvorrichtung weist mindestens eine Linearachse sowie mindestens einen Wagen auf, wobei der Wagen auf der Linearachse entlang der Linearachse geführt und/oder verfahrbar ist. Insbesondere trägt der Wagen z.B. über einen Bauteilaufnahmeabschnitt das Bauteil und/oder den Bauteilhalter. Ferner weist die Achsvorrichtung einen elektrischen Antrieb auf, welcher das Antriebsmoment zum Verfahren des Wagens auf der Linearachse bereitstellt. Besonders bevorzugt ist der elektrische Antrieb mit dem Wagen verbunden. Insbesondere umfasst der elektrische Antrieb mindestens einen Elektromotor.

Im Rahmen der Erfindung wird vorgeschlagen, dass die Achsvorrichtung eine mechanische Energiespeicheranordnung aufweist.

Die mechanische Energiespeicheranordnung ist ausgebildet, kinetische Energie von dem Wagen bei einem Abbremsen des Wagens entlang der Linearachse in potentielle Energie zu wandeln. Diese Umwandlung der Energie erfolgt in einem Energieladebereich der Linearachse, also in einem Teilabschnitt der Gesamtlänge der Linearachse. Es können auch mehrere derartige Energieladebereiche vorgesehen sein. Während des Ladens befindet sich die Energiespeicheranordnung in einem Ladezustand.

Zudem ist die Energiespeicheranordnung ausgebildet, in einem Speicherzustand die potentielle Energie zu speichern.

Die Energiespeicheranordnung ist ausgebildet, in einem Entladezustand die gespeicherte potentielle Energie in kinetische Energie umzuwandeln, um den Wagen entlang der Linearachse in einem Energiefreigabebereich der Linearachse zu beschleunigen. Insbesondere wirkt die Energiespeicheranordnung parallel zu dem elektrischen Antrieb.

Es ist dabei eine Überlegung der Erfindung, dass die Erzielung von höheren Beschleunigungen des Wagens zwar durch eine Vergrößerung des elektrischen Antriebs umgesetzt werden kann, dies jedoch auch zu einer Vergrößerung der mitgeführten Masse führt. Damit wird im Ergebnis die Effizienz der Vergrößerung des elektrischen Antriebs in Bezug auf die gewünschte hochdynamische Bewegung immer schlechter. Insbesondere ist nicht zu unterschätzen, dass derart vergrößerte elektrische Antrieb mit entsprechender, zusätzlichen Masse mitbeschleunigt und vor allem auch abgebremst werden muss. Folglich wird in dem elektrischen Antrieb Wärme generiert, welche ebenfalls abgeführt werden muss. Damit sind bei der Auslegung einer derartigen Achsvorrichtung nur mit einem elektrischen Antrieb physikalische Grenzen mit Blick auf das Wärmemanagement gesetzt. Bei elektromotorisch betätigten Achsen wird der Antriebsstrang somit beim Abbremsen und Beschleunigen zweifach belastet. Beim Abbremsen muss der Antrieb Energie abgeben, um die kinetische Energie des bewegten Objekts abzubauen, beim Beschleunigen um eine die kinetische Energie aufzubauen. Für Bewegungen, welche nicht kontinuierlich sind und häufige Geschwindigkeitswechsel zur Positionierung in diskreten Punkten aufweisen, wird hierdurch die Energie, die vom Antrieb zur Verfügung gestellt werden kann, in wesentlichem Anteil für das Beschleunigen eingesetzt. Hierbei entsteht zum einen ein "Energieverbrauch" und damit Betriebskosten zum anderen wird aufgrund der Verlustleistung der Antriebe Abwärme in die Umgebung abgegeben, welche anlagentechnisch über z.B. aktive Kühlung in ihrem Einfluss auf das System behandelt werden muss. Der "Energiebedarf" kann je nach Ausführung des Antriebssystems über "Rekuperation" und elektrische Pufferung oder Rückspeisung in das Versorgungsnetz optimiert werden, wenn die Hardware des Antriebs in der Lage ist Bremsleistung in Generatorfunktion zurückzuspeisen. Dies ist jedoch mit Kosten und Komplexität verbunden. Da hierbei der Antrieb weiter "leisten" muss, ist das Erwärmungsproblem hierdurch jedoch nicht reduziert, es entsteht weiter Abwärme, die insbesondere bei hoch präzisen Maschinen eine hoch relevante Herausforderung bildet, welche großen Einfluss auf Ausführung und Kostenstrukturen der Maschine haben kann.

Die Erfindung geht dagegen von einer zusätzlichen Energiespeicheranordnung aus, welche hinsichtlich der Kinematik insbesondere parallel zu dem elektrischen Antrieb eingesetzt wird. Anstatt den Wagen aktiv mit dem elektrischen Antrieb abzubremsen, wird diese negative Beschleunigung durch die Energiespeicheranordnung umgesetzt oder zumindest unterstützt, so dass der elektrische Antrieb entlastet wird. Die entzogene kinetische Energie wird in potentielle Energie umgewandelt und gespeichert, so dass zumindest wenig oder keine kinetische Energie in Wärmeenergie umgewandelt wird. Bei einem Beschleunigungsvorgang wird die gespeicherte potentielle Energie wieder in kinetische Energie umgewandelt, so dass auch bei einer positiven Beschleunigung der elektrische Antrieb entlastet ist.

Insbesondere wird ein Parallelantrieb vorgeschlagen, welcher energietechnisch betrachtet neutral oder quasi-neutral arbeitet, jedoch die Dynamik der Achsvorrichtung deutlich erhöht.

Bei einer bevorzugten Ausgestaltung der Erfindung ist der Wagen in dem Speicherzustand der Energiespeicheranordnung energieneutral in Bezug auf die gespeicherte potentielle Energie verfahrbar. Somit ist es möglich, zunächst die Energiespeicheranordnung in den Speicherzustand zu überführen und nachfolgend den Wagen zu verfahren ohne die gespeicherte potentielle Energie zu verändern. Dieser Ausgestaltung liegt die Überlegung zugrunde, dass die Steuerung und/oder Regelung des elektrischen Antriebs parallel zu der Energiespeicheranordnung regelungstechnisch anspruchsvoll ist. Gerade in Situationen, wobei beispielsweise der Wagen zum Stillstand abgebremst wird, ist es regelungstechnisch aufwendig, den Bremsvorgang bis zum Stillstand parallel mit der Energiespeicheranordnung und mit dem elektrischen Antrieb umzusetzen. Es ist dabei deutlich einfacher, über die Energiespeicheranordnung zunächst die kinetische Energie des Wagens zu reduzieren und nachfolgend ohne Einfluss der Energiespeicheranordnung den Wagen über den elektrischen Antrieb zum Stillstand zu bringen. Alternativ oder ergänzend ist der elektrische Antrieb frei nutzbar ohne das potentielle Energie zugefügt oder abgebaut wird. Insbesondere kann dies den Vorteil haben, dass der elektrische Antrieb nicht gegen die aus der potentiellen Energie wirkenden Kraft arbeiten muss. Somit ist der Wagen in dem Speicherzustand der Energiespeicheranordnung alternativ oder ergänzend kraftneutral in Bezug auf die gespeicherte potentielle Energie verfahrbar.

Die Speicherung der potentiellen Energie soll möglichst einfach und insbesondere mechanisch umgesetzt werden. Es ist daher bevorzugt, dass die potentielle Energie entweder als Höhenenergie gespeichert wird, wobei ein Gewicht, insbesondere unabhängig von dem Gewicht des Wagens, in einer Höhenlage verändert wird, so dass die potentielle Energie als Höhenenergie gespeichert ist. Alternativ oder ergänzend ist es bevorzugt, dass die potentielle Energie als Federenergie gespeichert wird. Beide Energiespeicherarten haben den Vorteil, dass der Speicherzustand energieneutral und energieverlustfrei umgesetzt werden kann.

Bei einer bevorzugten Ausgestaltung der Erfindung weist die Energiespeicheranordnung eine Energiespeichereinrichtung zur Speicherung der potentiellen Energie auf. Die Energiespeichereinrichtung arbeitet insbesondere unabhängig von einer Höhenenergie von dem Wagen. Sie bildet damit eine Energiespeichereinrichtung, welche optional von dem Wagen mitgeführt wird, jedoch die potentielle Energie unabhängig von dem Wagen speichert.

Für den Fall, dass die potentielle Energie als Federenergie ausgebildet ist, kann die Energiespeichereinrichtung beispielsweise formelastisch ausgebildet sein, so dass die Energiespeichereinrichtung beispielsweise als eine Blattfeder, Schenkelfeder, Spiralfeder, Druckfeder, Zugfeder etc. ausgebildet ist. Alternativ oder ergänzend hierzu kann die Energiespeichereinrichtung materialelastisch ausgebildet sein, so dass die Energiespeichereinrichtung beispielsweise als eine Gasdruckfeder realisiert ist, wobei die Federenergie in dem komprimierten Gas gespeichert ist. Auch eine Kombination von formelastischen und werkstoffelastischen Energiespeichereinrichtungen ist denkbar. Durch eine derartige Energiespeichereinrichtung kann die Federenergie mechanisch in einfacher Weise, dauerhaft und verlustfrei und/oder verlustarm gespeichert werden. Für den Fall, dass die potentielle Energie als Höhenenergie ausgebildet ist, kann die Energiespeichereinrichtung eine Speichermasse aufweisen, wobei die Speichermasse formlos oder als Körper ausgebildet ist und wobei die Speichermasse zur Energiespeicherung in der Höhe verändert ist. Die Höhenänderung kann beispielsweise über ein Getriebe etc. umgesetzt werden.

Bei einer möglichen Ausgestaltung der Erfindung, ist die Energiespeichereinrichtung ortsfest zu der Linearachse angeordnet. Somit ist vorgesehen, dass der Wagen zu der Energiespeichereinrichtung auf der Linearachse fährt und dort die kinetische Energie in potentielle Energie umgewandelt wird. Der Vorteil einer derartigen Anordnung ist, dass die Energiespeicheranordnung nicht mit dem Wagen mittransportiert wird und auf diese Weise keine bewegte Masse darstellt.

Bei einer alternativen Ausgestaltung der Erfindung ist vorgesehen, dass die Energiespeichereinrichtung mit dem Wagen mitbewegt wird. Diese Ausgestaltung hat den Vorteil, dass die Position der Umwandlung von kinetischer Energie in potentielle Energie bzw. in Gegenrichtung nicht durch die Position der Energiespeichereinrichtung festgelegt ist, sondern entlang der Linearachse beliebig und vor allem mehrfach hintereinander angeordnet sein kann. Eine derartige mitbewegte Energiespeichereinrichtung kann beispielsweise abwechselnd geladen und entladen werden, wobei ein derartiger Zyklus mehrfach entlang der Linearachse vorgesehen sein kann. Anders ausgedrückt können bei der mitbewegten Energiespeichereinrichtung mehrere Energieladebereiche und mehrere Energiefreigabebereiche entlang der Linearachse angeordnet sein. Insbesondere die Energiespeichereinrichtung von der potentiellen Energie des Wagens unabhängig ausgebildet.

Bei einer möglichen Ausgestaltung der Erfindung weist die Achsvorrichtung mindestens einen Umkehrpunkt auf, wobei der Energieladebereich in der Bewegungsrichtung des Wagens vor dem Umkehrpunkt angeordnet ist, um den Wagen vor dem Umkehrpunkt abzubremsen, so dass dieser verlangsamt und/oder abgebremst den Umkehrpunkt erreicht. Der Energiefreigabebereich ist nach dem Umkehrpunkt bezogen auf die Bewegungsrichtung des Wagens angeordnet, um den Wagen ausgehend von dem Umkehrpunkt weg zu beschleunigen. Beispielsweise ist es möglich, dass der Wagen in dem Energieladebereich soweit über die Umwandlung der kinetischen Energie in die potentielle Energie abgebremst wird, dass dieser in dem Umkehrpunkt angehalten wird. Alternativ oder ergänzend ist es möglich, dass der Wagen aus einer stehenden Position an dem Umkehrpunkt durch die Energiespeichereinrichtung und zwar durch die Umwandlung von der potentielle Energie in kinetische Energie weg beschleunigt wird. In dieser Ausgestaltung kann der Bereich auf der Bewegungsbahn des Wagens, der durch die Bewegungsrichtungsumkehr die größte Arbeit von dem elektrischen Antrieb erfordert, energietechnisch besonders entlastet werden.

Alternativ oder ergänzend weist die Linearachse einen oder mehrere Energiespeicherabschnitte auf, wobei der Energieladebereich am Anfang des Energiespeicherabschnitts angeordnet ist, um den Wagen abzubremsen und der Energiefreigabebereich am Ende des Energiespeicherabschnitts angeordnet ist, um den Wagen in gleicher Bewegungsrichtung zu beschleunigen. Damit ist es beispielsweise möglich den Wagen mit hoher Geschwindigkeit zu dem Energiespeicherabschnitt zu fahren und den Wagen am Anfang des Energiespeicherabschnitts energieneutral abzubremsen, so dass dieser den weiteren Energiespeicherabschnitt mit reduzierter Geschwindigkeit, zum Beispiel zum Beladen oder Entladen des Wagens oder zum Bearbeiten eines Werkstücks auf dem Wagen durchquert. Am Ende des Energiespeicherabschnitts wird der Wagen in der gleichen Bewegungsrichtung beschleunigt, indem die gespeicherte potentielle Energie wieder in kinetische Energie umgewandelt wird, so dass der Wagen insbesondere hochdynamisch weggefahren wird.

Bei einer möglichen Ausgestaltung der Erfindung weist die Energiespeicheranordnung einen Wagenpartner und einen Laufbahnpartner auf. Die Partner, also der Wagenpartner und der Laufbahnpartner, bilden gemeinsam eine Kurvenbahneinrichtung über die sich die Partner relativ zueinander bewegen. Der eine Partner weist eine Kurvenbahn, der andere Partner weist einen Läufer auf, welcher die Kurvenbahn ablaufen kann. Mindestens einer der Partner ist mit der Energiespeichereinrichtung wirkverbunden, insbesondere getriebetechnisch verbunden, so dass bei einem Ablaufen des Läufers auf der Kurvenbahn die Energiespeichereinrichtung in einem Energieladebereich geladen und/oder in einem Energiefreigabebereich entladen wird. Beispielsweise ist es möglich, dass der Läufer mit der Energiespeichereinrichtung verbunden ist, wobei der Läufer über die Kurvenbahn zwangsgeführt wird und auf diese Weise die Energiespeichereinrichtung mit Federenergie laden kann. Auf der anderen Seite ist es auch möglich, dass der Partner mit der Kurvenbahn mit der Energiespeichereinrichtung verbunden ist, wobei die Kurvenbahn relativ zu dem Läufer zwangsgeführt ist, so dass bei einem Ablaufen der Kurvenbahn an dem Läufer die Energiespeichereinrichtung mit potentieller Energie geladen wird.

Bei einer bevorzugten Ausgestaltung der Erfindung weist die Kurvenbahn einen Eingangsabschnitt auf, wobei der Eingangsabschnitt mit der Linearachse gleichgerichtet ist. Alternativ oder ergänzend weist die Kurvenbahn einen Ausgangsabschnitt auf, wobei der Ausgangsabschnitt mit der Linearachse gleichgerichtet ist. Durch die gleiche Richtung des jeweiligen Abschnitts mit der Linearachse wird der Läufer relativ zu der Linearachse in seiner Laderichtung nicht verschoben, so dass hier keine Umwandlung von kinetischer Energie in Federenergie oder in Gegenrichtung auftritt. Insbesondere wird es dadurch ermöglicht, dass der Wagen auch bei geladener Energiespeichereinrichtung energieneutral in dem Ausgangsabschnitt (und auch in dem Eingangsabschnitt) verfahrbar ist.

Bei einer möglichen Ausgestaltung der Erfindung weist der Läufer eine Laufrolle auf, wobei die Laufrolle auf der Kurvenbahn abrollt. Durch eine derartige Laufrolle wird die Reibung in der Achsvorrichtung im Bereich der Energiespeicheranordnung verringert. Bei einer möglichen Weiterbildung der Erfindung ist vorgesehen, dass die Laufrolle aktiv antreibbar ist. Insbesondere ist die Laufrolle aktiv antreibbar, wenn diese kontaktlos zu der Kurvenbahn angeordnet ist. Dieser Ausgestaltung liegt die Überlegung zugrunde, dass bei einem Anfahren der Laufrolle relativ zu der Kurvenbahn stets eine Anfangsbeschleunigung der Laufrolle umzusetzen ist, so dass durch die Anfangsbeschleunigung stets ein Anfahrruck durch die Achsvorrichtung gehen wird. Dadurch, dass die Laufrolle aktiv antreibbar ist, kann diese auf eine Drehzahl vorbeschleunigt werden, die der späteren Drehzahl beim Abrollen auf der Kurvenbahn entspricht, so dass der Anfangsruck vermieden ist.

Bei einer bevorzugten Realisierung der Erfindung umfasst die Energiespeichereinrichtung eine Schenkelfeder zur Energiespeicherung. Die Schenkelfeder ist mit einem Schenkel stationär an einem der Partner und mit dem anderen Schenkel mit dem Läufer verbunden. Die Schenkelfeder hat zum einen den Vorteil, dass diese besonders kostengünstig integrierbar ist. Zum anderen beschreibt der Läufer an dem bewegten Schenkel eine kreisförmige Ladebahn, wenn dieser Schenkel relativ zum anderen gegen die Federkraft bewegt wird, wobei die kreisförmige Ladebahn eine besonders effektive Kraftübertragung auf den anderen Partner bewirkt.

Ergänzend ist es besonders bevorzugt, dass die Schenkelfeder bzw. der freie Schenkel mit dem Läufer stechend in die Kurvenbahn eingefahren wird. Durch das stechende Einfahren wird die effektive Kraftübertragung weiter verbessert.

Ein weiterer Gegenstand Erfindung betrifft eine Förderanlage, wobei die Förderanlage mindestens eine Achsvorrichtung umfasst, wie diese beschrieben wurde bzw. nach einem der vorhergehenden Ansprüche.

Die Förderanlage weist vorzugsweise mehrere Achsvorrichtungen z.B. zum Transport von Bauteilaufnahmeabschnitten auf. Insbesondere kann die Förderanlage vier, fünf, sechs oder mehr Achsvorrichtungen mit gleicher oder unterschiedlicher Bauweise aufweisen. Insbesondere weist jede Achsvorrichtung mindestens oder genau einen Bauteilaufnahmeabschnitt auf. Der Bauteilaufnahmeabschnitt bildet eine mechanische Schnittstelle zur Aufnahme des genau oder mindestens einen Bauteils bzw. des genau oder mindestens einen Bauteilhalters. Der Bauteilaufnahmeabschnitt kann Organe, wie zum Beispiel Stifte, Greifer, aktive Organe, insbesondere aktive Greifer oder dergleichen, zur lagedefinierten Aufnahme des Bauteils und/oder des Bauteilhalters aufweisen.

Die Achsvorrichtungen sind bevorzugt unabhängig voneinander ausgebildet und können jeweils eine oder mehrere Einzelachsen, vorzugsweise genau zwei Einzelachsen zur Bewegung und/oder Manipulation des Bauteilaufnahmeabschnitts aufweisen. Optional weist die Achsvorrichtung weitere Achsen auf, die insbesondere keine Shuttle Funktion erfüllen, sondern eine Feinausrichtung des Bauteils bzw. Bauteilhalters im Sinne der Einstellung der Bauteilposition ermöglichen z.B. "Winkeljustage" oder "geradedrücken" oder dergleichen, um das Bauteil trotz Toleranzen in den Prozessbereich der Prozesseinheit, insbesondere des Druckkopfs zu bringen.

Die mindestens eine Achsvorrichtung hat bevorzugt die Aufgabe, den zugeordneten Bauteilaufnahmeabschnitt auf mindestens oder genau einer Stationsstrecke entlang einer Haupttransportrichtung in mindestens oder genau einer Bauteilstation zu transportieren. Vorzugsweise werden die Bauteilaufnahmeabschnitte auf der Stationsstrecke geradlinig entlang einer Haupttransportrichtung transportiert. Die Bauteilstation kann beispielsweise eine Prozessfunktion und/oder eine Fertigungsfunktion und/oder eine Messfunktion aufweisen. Besonders bevorzugt weist die Bauteilstation eine Prozesseinheit auf, wobei der Bauteilaufnahmeabschnitt entlang der Stationsstrecke an der Prozesseinheit zur Prozessierung des Bauteils transportiert wird. Besonders bevorzugt wird der Bauteilaufnahmeabschnitt kontinuierlich entlang der Stationsstrecke transportiert. Mögliche Prozesse in der Bauteilstation und/oder relativ zu der Prozesseinheit sind: Bedrucken von Oberflächen der Bauteile; Vermessen von Oberflächen der Bauteile; Digitalisieren von Oberflächenstrukturen, Farben und Eigenschaften der Bauteile; Sonstige Prozessierung, Behandlung und/oder Analyse von Bauteiloberflächen; Prozessierung von Materialien oder der Bauteile bei kontinuierlicher oder alternativ bei getakteter Arbeitsweise. Alternativ hierzu kann die Achsvorrichtung für pick and place Anwendungen eingesetzt werden.

Optional umfasst die Förderanlage die Bauteilstation. Optional definiert die Bauteilstation eine Prozessrichtung über die der Prozess in Richtung des Bauteils oder des Bauteilaufnahmeabschnitts erfolgt.

Vorzugsweise weist die Achsvorrichtung eine Verfahrlänge von mehr als 2 m, vorzugsweise von mehr als 3 m, insbesondere von mehr als 4 m auf. Besonders bevorzugt bewegt die Achsvorrichtung den Bauteilaufnahmeabschnitt oszillierend und/oder hin- und herfahrend in der Haupttransportrichtung. Bei speziellen Ausführungsformen, insbesondere bei pick and place Anwendungen, kann die Verfahrlänge kleiner als 0,5 m, insbesondere kleiner als 0,3 m ausgebildet sein.

Beispielsweise können bei Druckanwendungen vor einer Druckstrecke ein Energieladebereich und nach der Druckstrecke ein Energiefreigabebereich und während der Druckstrecke ein energieneutraler Bereich ausgebildet sein.

Weitere Merkmale, Vorteile und Wirkung der Erfindung ergeben sich aus der nachfolgenden Beschreibung bevorzugter Ausführungsbeispiele der Erfindung sowie der beigefügten Figuren. Diese zeigen:
Fig. 1 a, b, c jeweils eine schematische Darstellung von einer Achsvorrichtung als ein Ausführungsbeispiel der Erfindung;
Fig. 2 eine schematische Darstellung von einer Energiespeicheranordnung für die Achsvorrichtung in den vorhergehenden Figuren;
Fig. 3 eine schematische Darstellung einer Abfolge beim Zusammenfahren der Partner der Energiespeicheranordnung in der Figur 2;
Fig. 4 eine schematische Darstellung von einer weiteren Energiespeicheranordnung für die Achsvorrichtung in den vorhergehenden Figuren;
Fig. 5 eine schematische Darstellung von der Energiespeicheranordnung mit angetriebenem Läufer.

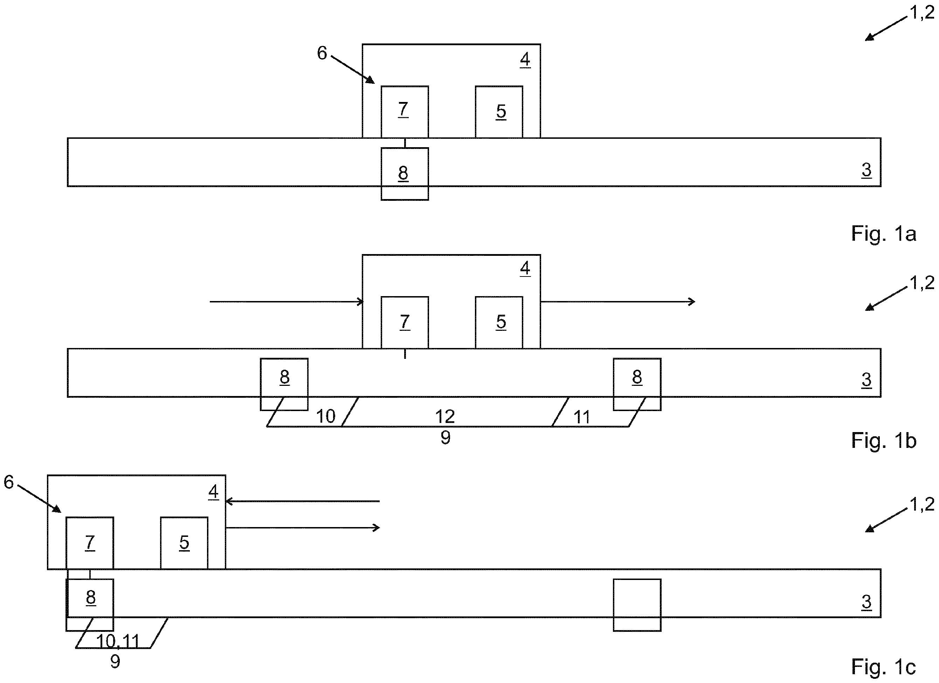

Die Figuren 1 a, b, c zeigen jeweils eine Achsvorrichtung 1 von einer Förderanlage 2 als ein Beispiel der Erfindung. Die Förderanlage 2 kann - wie gezeigt - genau eine Achsvorrichtung 1 oder mehrere Achsvorrichtungen 1 aufweisen. Ferner kann die Förderanlage 2 z.B. eine Bearbeitungsstation, eine Beladestation und/oder eine Entladestation aufweisen (nicht gezeigt).

Die Achsvorrichtung 1 weist eine Linearachse 3 auf, wobei die Linearachse 3 beispielsweise als eine Schiene, insbesondere Stahlschiene oder als ein Aluminiumprofil ausgebildet ist oder dieses umfasst. Ferner weist die Achsvorrichtung 1 einen Wagen 4 auf, wobei der Wagen 4 in einer Bewegungsrichtung auf der Linearachse 3 verschiebbar angeordnet ist. Die Achsvorrichtung 1 weist einen elektrischen Antrieb 5 auf, wobei der elektrische Antrieb 5 bei diesem Ausführungsbeispiel an dem Wagen 4 angeordnet ist, um diesen aktiv entlang der Linearachse 3 verfahren zu können.

Die Achsvorrichtung 1 weist eine mechanische Energiespeicheranordnung 6 auf, welche kinematisch parallel zu dem elektrischen Antrieb 5 angeordnet ist. Die Energiespeicheranordnung 6 weist einen Wagenpartner 7 und einen Laufbahnpartner 8 auf, welche miteinander in Wechselwirkung treten können. Der Wagenpartner 7 ist an dem Wagen 4 angeordnet, der Laufbahnpartner 8 ist an der Linearachse angeordnet und/oder stationär befestigt.

Die Energiespeicheranordnung 6 hat die Funktion, kinetische Energie von dem Wagen 4 bei einem Abbremsen des Wagens 4 entlang der Linearachse 3 in potentielle Energie umzuwandeln. Zudem hat die Energiespeicheranordnung 6 die Funktion, die potentielle Energie zu speichern. Als weitere Funktion kann die Energiespeicheranordnung 6 gespeicherte potentielle Energie oder einen Teil davon in kinetische Energie zurück umwandeln und den Wagen 4 mit der umgewandelten potentiellen Energie entlang der Linearachse 3 zu beschleunigen. Die Energiespeicheranordnung 6 bildet damit beim Entladen der potentiellen Energie einen mechanischen Antrieb, welcher kinematisch parallel zu dem elektrischen Antrieb 5 wirkt. Es kann vorgesehen sein, dass die parallelen Antriebe vollständig oder weitgehend parallel arbeiten, alternativ weisen diese nur parallele Kraftkomponenten auf.

Durch diesen mechanischen Parallelantrieb ist es möglich, dass entlang der Linearachse 3 in einem Energieladebereich, wobei in dem Energieladebereich der Wagen 4 abgebremst wird, die mechanische Energiespeicheranordnung 6 mit potentieller Energie zu laden. In einem Energiefreigabebereich wird dagegen die gespeicherte potentielle Energie in kinetische Energie gewandelt, um den Wagen 4 zu beschleunigen.

Die Figur 1b zeigt eine Variation der Achsvorrichtung 1 in die Figur 1a, wobei entlang der Linearachse 3 ein Energiespeicherabschnitt 9 vorgesehen ist, in dem entlang der Bewegungsrichtung des Wagens 4 zunächst ein derartiger Energieladebereich 10 und am Ende des Energiespeicherabschnitts 9 ein derartiger Energiefreigabebereich 11 angeordnet ist. Funktional betrachtet tritt der Wagen 4 in den Energieladebereich 10 ein und wird dort abgebremst, wobei die kinetische Energie in die potentielle Energie umgewandelt wird. In einem Zwischenbereich 12 zwischen den Energieladebereich 10 und dem Energiefreigabebereich 11 kann der Wagen 4 beispielsweise mit einer verringerten Geschwindigkeit durchgefahren werden. Dabei verhält sich die Energiespeicheranordnung 6 energieneutral und/oder passiv. Nachfolgend tritt der Wagen 4 in den Energiefreigabebereich 11 ein, wobei die potentielle Energie oder Teile der potentiellen Energie wieder freigegeben werden, um den Wagen 4 zu beschleunigen. Beispielsweise ist in dem Zwischenbereich 12 die Bearbeitungsstation oder die Umladestation angeordnet, wobei die Geschwindigkeit im Vergleich zu den Bereichen außerhalb des Energiespeicherabschnitts 9 verringert sein muss. Durch die mechanische Energiespeicheranordnung 6 ist es möglich, das Abbremsen und das Beschleunigen quasi energieneutral durchzuführen. Optional kann der elektrische Antrieb 5 das Abbremsen und/oder das Beschleunigen aktiv unterstützen.

In der Figur 1 c ist die Achsvorrichtung 1 der vorhergehenden Figuren gezeigt, wobei der Wagen 4 einen Umkehrpunkt, zum Beispiel am Ende der Linearachse 3 durchfährt. Vor dem Umlenkpunkt tritt der Wagen 4 in einen derartigen Energieladebereich 10 ein und wird vor dem Umkehrpunkt abgebremst. Das Abbremsen kann ausschließlich mechanisch über die Energiespeicheranordnung 6 oder alternativ durch eine Kombination aus mechanischem und elektromotorischen Abbremsen unter Nutzung des elektrischen Antriebs 5 realisiert sein. Jedenfalls wird die Geschwindigkeit des Wagens 4 im Umkehrpunkt auf Null reduziert. Beispielsweise kann in dem Umkehrpunkt ein Beladen oder Entladen des Wagens 4 mit einem Werkstück durchgeführt werden. Nachfolgend tritt der Wagen 4 in einen derartigen Energiefreigabebereich 11 ein, wobei die gespeicherte potentielle Energie oder Teile davon in kinetische Energie umgewandelt werden, um den Wagen 4 von dem Umkehrpunkt weg zu beschleunigen. An dem Umkehrpunkt sind in Bewegungsrichtung des Wagens der Energieladebereich 10 und der Energiefreigabebereich 11 hintereinander angeordnet, jedoch in Bezug auf die Linearachse 3 überlappend positioniert.

Es ist insbesondere vorgesehen, dass in dem jeweiligen Energieladebereich 10 bzw. Energiefreigabebereich 11 jeweils ein derartiger Laufbahnpartner 8 der mechanischen Energiespeicheranordnung 6 angeordnet ist, wie dies in der Figur 1b gezeigt ist. Dagegen kann vorgesehen sein, dass auf dem Wagen 4 nur ein einziger Wagenpartner 7 angeordnet ist.

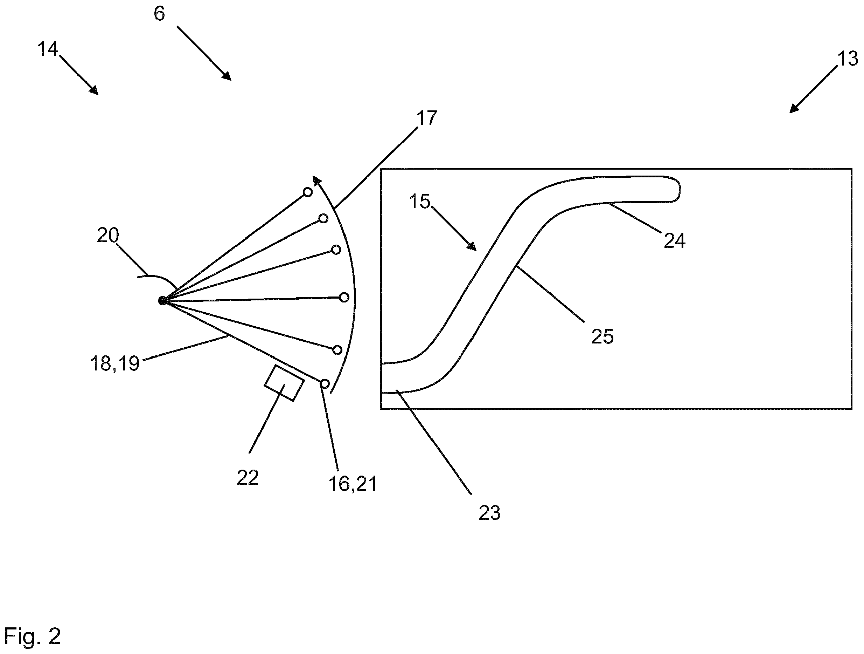

Die Figur 2 zeigt ein Ausführungsbeispiel für die Energiespeicheranordnung 6 in einer stark schematisierten Darstellung. Die Energiespeicheranordnung 6 weist einen ersten Partner 13 und einen zweiten Partner 14 auf. Der erste Partner 13 kann als der Wagenpartner 7 oder als der Laufbahnpartner 8 ausgebildet sein. Der zweite Partner 14 ist entsprechend gegengleich ausgebildet.

Der erste Partner 13 weist eine Kurvenbahn 15 auf, der zweite Partner 14 weist dagegen einen Läufer 16 auf, welcher entlang der Kurvenbahn 15 bei einer Relativbewegung zwischen dem ersten Partner 13 und dem zweiten Partner 14 zwangsgeführt ist. Der Läufer 16 ist mit einer Energiespeichereinrichtung 18 der Energiespeicheranordnung 6 wirkverbunden, so dass eine durch die Kurvenbahn 15 zwangsgeführte Bewegung des Läufers 16 entlang einer Ladebahn 17 die Energiespeichereinrichtung 18 in der einen Richtung der Ladebahn 17 mit potentiellen Energie aufgeladen und in der anderen Richtung der Ladebahn 17 entladen wird.

Beispielsweise kann die potentielle Energie als Federenergie ausgebildet sein. In diesem Ausführungsbeispiel ist die Energiespeichereinrichtung 18 als eine Schenkelfeder 19 realisiert. Die Schenkelfeder 19 ist ähnlich wie eine Blattfeder ausgebildet und ist mit einem Schenkel 20 an einem Fixpunkt des zweiten Partners 14 und an dem anderen Schenkel 21 mit dem Läufer 16 verbunden. Bei einer Auslenkung der Schenkelfeder 19, indem der Läufer 16 entlang der Laufbahn 18 bewegt wird, wird die Schenkelfeder 19 gespannt und dadurch mit Federenergie aufgeladen bzw. in Gegenrichtung entspannt und damit entladen. Die Schenkelfeder 19 ist in der Figur 2 mehrfach in verschiedenen Ladezuständen entlang der Ladebahn 17 gezeigt.

Der zweite Partner 14 weist einen mechanischen Anschlag 22 auf, an dem die Schenkelfeder 19 in Ruhestellung und/oder entspannten Zustand anliegt. Der Anschlag 22 ist so positioniert, dass der Läufer 16 in der Ruhestellung in die Kurvenbahn 15 insbesondere ruckfrei eingefahren wird.

Die Kurvenbahn 15 weist einen Eingangsabschnitt 23 sowie einen Ausgangsabschnitt 24 auf, wobei der Eingangsabschnitt 23 und/oder der Ausgangsabschnitt 24 gleichgerichtet zu einer Bewegungsrichtung von dem ersten oder dem zweiten Partner 13, 14 sind. Bei einer Relativbewegung zwischen dem ersten und dem zweiten Partner 13, 14 fährt der Läufer 16 in den Eingangsabschnitt 23 ein und wird zunächst nicht entlang der Ladebahn 17 bewegt. Damit verhält sich die Energiespeicheranordnung 6 energieneutral bei einer Bewegung des Wagens 4 in Bewegungsrichtung. Erst in einem Steigungsabschnitt 25 zwischen dem Eingangsabschnitt 23 und dem Ausgangsabschnitt 24 wird der Läufer 16 dann relativ zu dem Fixpunkt 20 derart verfahren, dass dieser sich entlang der Ladebahn 17 bewegt und in dem Ausgangsabschnitt 24 die Schenkelfeder 19 gespannt ist. Der Ausgangsabschnitt ist parallel zu der Bewegungsrichtung des Wagens 4 ausgerichtet, so dass die Energiespeicheranordnung 6 energieneutral bei einer Bewegung des Wagens 4 in Bewegungsrichtung ist.

Betrachtet man beispielsweise die Situation gemäß der Figur 1c in dem Umkehrpunkt, so kann beispielsweise der erste Partner 13 als der Wagenpartner 7 und der zweite Partner 14 als der Laufbahnpartner 8 ausgebildet sein. In diesem Fall fährt der Wagen 4 mit dem ersten Partner 13 auf den zweiten Partner 14 zu und fängt den Läufer 16 mit der Kurvenbahn 15. Wenn sich der Wagen 4 weiter in Richtung Umkehrpunkt bewegt, läuft der Läufer 16 den Zwischenabschnitt 25 nach oben, wobei kinetische Energie des Wagens 4 in Federenergie der Schenkelfeder 19 umgewandelt wird.

Sobald der Läufer 16 in dem Ausgangsabschnitt 15 angekommen ist, wird bei einem weiteren Verfahren des Wagens 4 in Richtung des Umkehrpunkts keine weitere kinetische Energie umgewandelt. Der Verfahrweg ist dann energieneutral. Zudem ist der Läufer 16 in dem zu der Linearachse 3 gleichgerichteten Ausgangsabschnitt 15 selbsthaltend angeordnet, so dass auch keine Federenergie in kinetische Energie umgewandelt werden kann.

Über den elektrischen Antrieb 5 kann dann der Wagen 4 in Gegenrichtung gestartet werden, wobei die Energiespeicheranordnung 6 Federenergie in kinetische Energie umwandelt, jedoch erst, wenn der Läufer 16 den Ausgangsabschnitt 24 verlassen hat und in den Steigungsabschnitt 25 eintritt.

Für die Situation in der Figur 1b kann beispielsweise vorgesehen sein, dass der zweite Partner 14 als der Wagenpartner 7 ausgebildet ist. Alternativ hierzu ist der erste Partner 13 mit dem Wagen 4 verbunden. In beiden Fällen kann die Kurvenbahn 15 nach dem Ausgangsabschnitt 24 einen weiteren Steigungsabschnitt 25 aufweisen, welcher jedoch in Gegenrichtung orientiert ist und zu einem weiteren Eingangsabschnitt 23 führen. Sobald der Wagen 4 in den Energiespeicherabschnitt 9 eintritt, wird der Läufer 16 energieneutral in dem Eingangsabschnitt 23 gefangen. Nachfolgend tritt der Wagen 4 in den Energieladebereich 10 ein, wobei die Energiespeichereinrichtung in bereits beschriebener Weise über das Durchlaufen des Steigungsabschnitts 25 mit Federenergie geladen wird. Nachfolgend schließt sich der energieneutrale Ausgangsabschnitt 24 an und der Wagen 4 durchläuft den Zwischenbereich 12. Sobald der Wagen 4 in den Energiefreigabebereich 11 eintritt, fährt der Läufer 16 den weiteren Steigungsabschnitt ab und wandelt auf diese Weise die Federenergie in kinetische Energie um. Über den weiteren Eingangsabschnitt kann der Läufer dann energieneutral aus der Kurvenbahn 15 ausfahren. Erfolgt eine Richtungsumkehr des Wagens 4, kann der Energiespeicherabschnitt 9 in Gegenrichtung durchfahren werden.

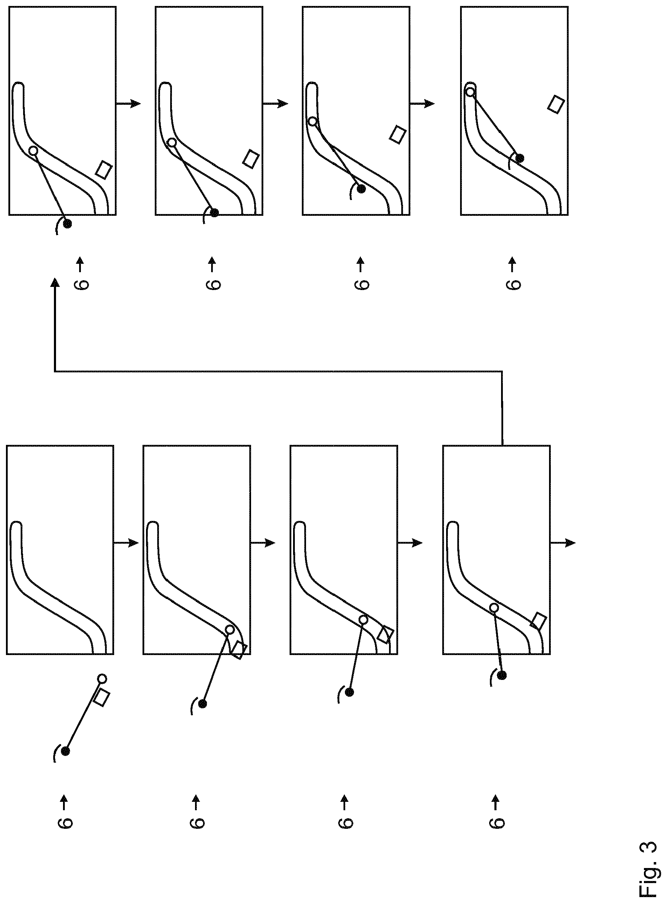

Die Figur 3 zeigt einen schematischen Ablauf beim Laden der Energiespeicheranordnung 6. Das Entladen erfolgt in umgekehrter Reihenfolge.

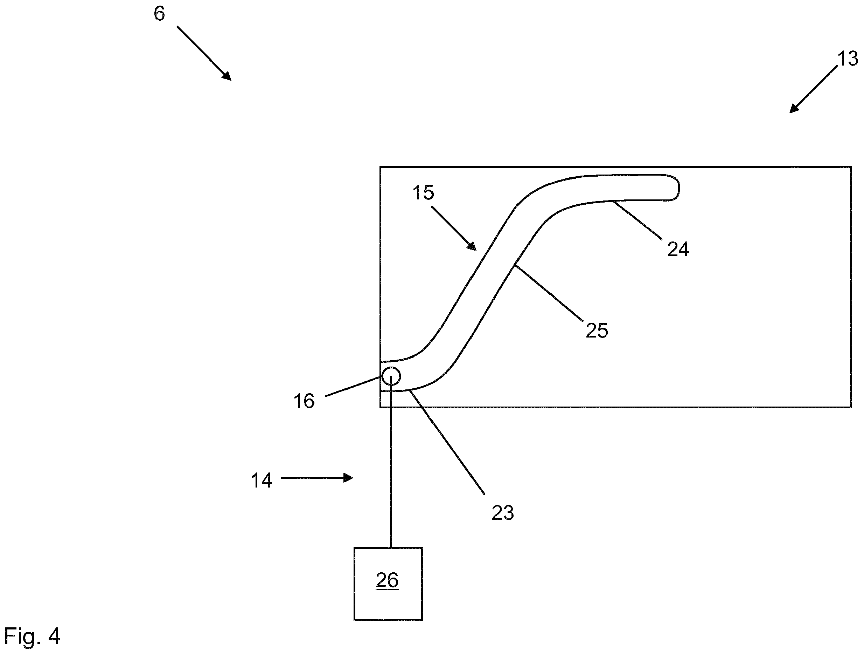

Die Figur 4 zeigt in gleicher Darstellung wie die Figur 2 eine alternative Ausgestaltung für den zweiten Partner 14. Bei dem Ausführungsbeispiel in der Figur 4 nutzt die Energiespeicheranordnung 6 als potentielle Energie eine Höhenenergie und keine Federenergie. Der zweite Partner 14 weist in gleicher Weise die Läufer 16 auf, welcher jedoch bei diesem Ausführungsbeispiel mit einem Gewicht 26 als Energiespeichereinrichtung 18 verbunden ist, so dass in dem Steigungsabschnitt 25 das Gewicht 26 nach oben gezogen wird, wobei die Energiespeichereinrichtung 18 mit Höhenenergie geladen wird. Der Läufer 16 verhält sich wie zuvor beschrieben, so dass auf die vorhergehende Beschreibung verwiesen wird.

Statt einem nach unten orientierten Gewicht 26, kann auch die Höhenenergie über ein Getriebe oder eine andere Konstruktion abgeführt werden. In analoger Weise ist es auch möglich, dass statt dem Gewicht 26 eine Druckfeder oder eine Zugfeder eingesetzt wird und die potentielle Energie als Federenergie ausgebildet ist.

Hinzuweisen ist noch darauf, dass bei dem Ausführungsbeispiel in der Figur 4 die Gewichtskraft von dem Gewicht 26 bzw. die Federkraft von einer analog angeordneten Feder nach unten orientiert ist. Die Schenkelfeder 18 in der Figur 2 drückt dagegen tangential zu der Ladebahn 17, so dass die Kraftkomponente in Bewegungsrichtung des Wagens 4 anteilig größer ausfällt als bei dem Ausführungsbeispiel in der Figur 4.

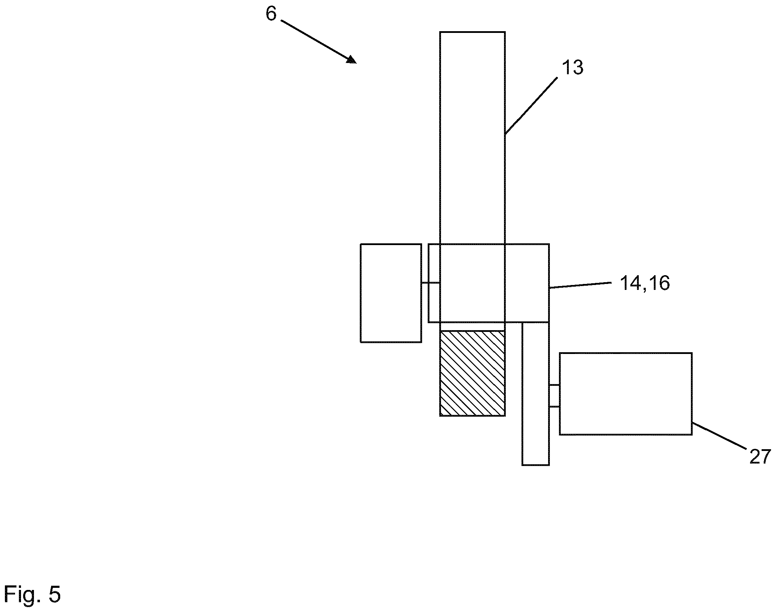

Die Figur 5 zeigt in einer stark schematisierten Darstellung die Energiespeicheranordnung 6 in einer Ansicht in Bewegungsrichtung, wobei zum einen der erste Partner 13 mit der Kurvenbahn 15 und der zweite Partner 14 mit dem Läufer 16 zu erkennen ist. Der Läufer 16 ist als eine rotierbare Rolle ausgebildet, welche entlang der Kurvenbahn 15 abrollen kann. Dabei ist es unerheblich, ob die Energiespeichereinrichtung 17 nach dem Ausführungsbeispiel in der Figur 2 oder in der Figur 4 oder nach einem anderen Ausführungsbeispiel ausgebildet ist.

Die Achsvorrichtung 1, insbesondere die Energiespeicheranordnung 6 weist einen Antriebsmotor 27 auf, welche ausgebildet ist, den Läufer 16 vor dem Kontakt mit der Kurvenbahn 15 in Rotation zu bringen, so dass beim Kontakt mit der Kurvenbahn 15 keine nennenswerte Relativbewegung entsteht, die Verschleiß auf der Rolle und der Kurvenbahn 15 erzeugt.

### Bezugszeichenliste:

- 1: Achsvorrichtung
- 2: Förderanlage
- 3: Linearachse
- 4: Wagen
- 5: elektrischer Antrieb
- 6: Energiespeicheranordnung
- 7: Wagenpartner
- 8: Laufbahnpartner
- 9: Energiespeicherabschnitt
- 10: Energieladebereich
- 11: Energiefreigabebereich
- 12: Zwischenbereich
- 13: erster Partner
- 14: zweiter Partner
- 15: Kurvenbahn
- 16: Läufer
- 17: Ladebahn
- 18: Energiespeichereinrichtung
- 19: Schenkelfeder
- 20: Schenkel
- 21: Schenkel
- 22: Anschlag
- 23: Eingangsabschnitt
- 24: Ausgangsabschnitt
- 25: Steigungsabschnitt
- 26: Gewicht
- 27: Antriebsmotor

## Patentansprüche

1. Achsvorrichtung (1)
mit einer Linearachse (3),
mit mindestens einem Wagen (4) und
mit einem elektrischen Antrieb (5) zum Verfahren des Wagens (4) auf der Linearachse (3),
**gekennzeichnet durch**
eine mechanische Energiespeicheranordnung (6), wobei die Energiespeicheranordnung (6) einen Ladezustand zum Umwandeln von kinetischer Energie bei einem Abbremsen des Wagens (4) entlang der Linearachse (3) in einem Energieladebereich (10) in potentielle Energie, einen Speicherzustand zum Speichern der potentiellen Energie und einen Entladezustand zum Umwandeln der gespeicherten potentiellen Energie in kinetische Energie bei einer Beschleunigung des Wagens (4) entlang der Linearachse (3) in einem Energiefreigabebereich (11) einnehmen kann.

2. Achsvorrichtung (1) nach einem der vorhergehenden Ansprüche, **dadurch gekennzeichnet, dass** der Wagen (4) in dem Speicherzustand der Energiespeicheranordnung (6) energieneutral in Bezug auf die gespeicherte potentielle Energie und/oder kraftneutral in Bezug auf die Energiespeicheranordnung (6) verfahrbar ist.

3. Achsvorrichtung (1) nach Anspruch 1 oder 2, **dadurch gekennzeichnet, dass** die potentielle Energie als eine Höhenenergie und/oder als eine Federenergie ausgebildet ist.

4. Achsvorrichtung (1) nach einem der vorhergehenden Ansprüche, **dadurch gekennzeichnet, dass** die Energiespeicheranordnung (6) mindestens eine Energiespeichereinrichtung (18) zur Speicherung der potentiellen Energie aufweist.

5. Achsvorrichtung (1) nach Anspruch 4, **dadurch gekennzeichnet, dass** die Energiespeichereinrichtung (18) ortsfest zu der Linearachse (3) angeordnet ist oder dass die Energiespeichereinrichtung (18) mit dem Wagen (4) mitbewegt ist.

6. Achsvorrichtung (1) nach einem der vorhergehenden Ansprüche, **dadurch gekennzeichnet, dass** die Achsvorrichtung (1) mindestens einen Umkehrpunkt aufweist, wobei der Energieladebereich (10) vor dem Umkehrpunkt liegt, um den Wagen (4) vor dem Umkehrpunkt abzubremsen, und der Energiefreigabebereich (11) nach dem Umkehrpunkt liegt, um den Wagen (4) von dem Umkehrpunkt weg zu beschleunigen.

7. Achsvorrichtung (1) nach einem der vorhergehenden Ansprüche, **dadurch gekennzeichnet, dass** die Linearachse (3) einen Energiespeicherabschnitt (9) aufweist, wobei der Energieladebereich (10) am Anfang des Energiespeicherabschnitts (9) angeordnet ist, um den Wagen (4) abzubremsen, und der Energiefreigabebereich (11) am Ende des Energiespeicherabschnitts (9) angeordnet ist, um den Wagen (4) in gleicher Bewegungsrichtung zu beschleunigen.

8. Achsvorrichtung (1) nach einem der vorhergehenden Ansprüche, **dadurch gekennzeichnet, dass** die Energiespeicheranordnung (16) einen Wagenpartner (7) und einen Laufbahnpartner (8) aufweist, wobei die Partner (7,8) gemeinsam eine Kurvenbahneinrichtung bilden über die sich die Partner (7,8) relativ zueinander bewegen, wobei der eine Partner mindestens oder genau eine Kurvenbahn (15) und der andere Partner einen Läufer (16) aufweist, wobei mindestens einer der Partner (15,16) mit der Energiespeichereinrichtung (18) wirkverbunden ist, so dass bei einem Ablaufen des Läufers (16) auf der Kurvenbahn (15) die Energiespeichereinrichtung (18) in einem Energieladebereich (10) geladen und/oder in einem Energiefreigabebereich (11) entladen wird.

9. Achsvorrichtung (1) nach Anspruch 8, **dadurch gekennzeichnet, dass** die mindestens oder genau eine Kurvenbahn (15) einen Eingangsabschnitt (23) aufweist, wobei der Eingangsabschnitt (23) mit der Linearachse (3) gleichgerichtet ist und/oder einen Ausgangsabschnitt (24) aufweist, wobei der Ausgangsabschnitt (24) mit der Linearachse (3) gleichgerichtet ist, so dass der Läufer (16) in dem Eingangsabschnitt (23) bzw. Ausgangsabschnitt (24) energieneutral verfährt.

10. Achsvorrichtung (1) nach einem der vorhergehenden Ansprüche 8 oder 9, **dadurch gekennzeichnet, dass** der Läufer (16) durch die Kurvenbahn (15) entlang einer Ladebahn (17) in einer Richtung quer zu der Linearachse (3) geführt ist, wobei der Läufer (16) mit der Energiespeichereinrichtung (18) wirkverbunden ist, um die Energiespeichereinrichtung (17) zu laden und/oder zu entladen.

11. Achsvorrichtung (1) nach einem der vorhergehenden Ansprüche, **dadurch gekennzeichnet, dass** der Läufer (16) eine Laufrolle aufweist, wobei die Laufrolle (16) auf der Kurvenbahn (15) abrollt.

12. Achsvorrichtung (1) nach Anspruch 11, **dadurch gekennzeichnet, dass** die Laufrolle aktiv antreibbar ist.

13. Achsvorrichtung (1) nach einem der vorhergehenden Ansprüche, **dadurch gekennzeichnet, dass** die Energiespeichereinrichtung (18) eine Schenkelfeder (19) zur Energiespeicherung aufweist, wobei die Schenkelfeder (19) mit einem Schenkel stationär (20) an einem der Partner und mit dem anderen Schenkel (21) mit dem Läufer (16) verbunden ist.

14. Achsvorrichtung (1) nach Anspruch 13, **dadurch gekennzeichnet, dass** die Schenkelfeder (19) stechend in die Kurvenbahn (15) eingefahren wird.

15. Förderanlage (2) mit mindestens einer Achsvorrichtung (1) nach einem der vorhergehenden Ansprüche.
